# EUROPEAN PATENT SPECIFICATION

(11) **EP 0 425 272 B1**
(45) Date of publication and mention of the grant of the patent: **14.09.1994**
(21) Application number: 90311660.6
(22) Date of filing: 24.10.1990
(51) Int. Cl.: A23L 1/308, A23L 1/09, A23L 1/18, A23L 1/0534

(54) **Dietary material**
Diätprodukt
Produit diététique

(30) Priority: 24.10.1989 GB 8923890
(43) Date of publication of application: 02.05.1991
(73) Proprietor: ROWETT RESEARCH SERVICES LIMITED, Bucksburn, Aberdeen AB2 9SB (GB)
(72) Inventor: Fowler, Vernon, Aberdeen, AB1 0QR (GB)
(74) Representative: Pattullo, Norman

(56) References cited:
- EP-A- 0 005 958
- WO-A-89/00817
- DE-A- 2 225 483
- US-A- 4 659 388
- PATENT ABSTRACTS OF JAPAN vol. 12, no. 306 (C-522)(3153), 19 August 1988; & JP-A-6379575 (Terumo Corp.) 09.04.1988

## Description

This invention relates to dietary material and to a method of producing it.

Lactose and other sugars have been known as dietary materials for some time. In the case of lactose, and some other sugars, a proportion is not hydrolysed directly by endogenous enzymes but is fermented by the bacteria of the gut. The development of a favourable bacterial flora in the gut is an important dimension of health. A favourable flora is known to contain a high proportion of lactobacilli and these in turn are associated with the production of lactic acid and other metabolites from suitable substrates, thereby controlling the upgrowth of potentially pathogenic bacteria, eg Esherichia coli.

At weaning much of this beneficial effect of lactose fermentation can be lost because the concentration of lactose in the early weaning diet is much less than that of milk. The stabilising effect of lactobacilli on the composition of the gut flora is compromised. Maintaining high proportions of milk and whey products in the diets can be unduly expensive because the Lactose of milk and whey can to a large extent be directly hydrolysed by the endogenous lactases in the foregut yielding the monosaccharides galactose and glucose. These monosaccharides are in turn absorbed directly into the bloodstream and neither these nor the lactose are available as a substrate for lactobacilli.

It is common practice to counteract the loss of stability in the profile of the gut flora, provided by lactobacilli, in early weaned livestock by the inclusion in the diet of antibiotics such as virginiamycin, zinc bacitracin and the penicillins.

In the view of the public who consume meat products, there is increasing concern and in some cases considerable resentment about the possible risks of eating meat containing residues from antibiotic treatment.

There is now a very great interest in alternative approaches which use more natural methods but which preserve the health of the animal. One such approach has been to try and develop strains of 'friendly' bacteria which can be introduced into the gut and effectively take control. These so-called probiotics can be costly and also subject to certain ethical objections. For example the organisms may not be natural inhabitants of the animal's gut and may themselves secrete powerful antibiotics which are alien to the animal. In addition, they have not been shown conclusively to be effective over a wide range of practical circumstances.

Earlier European Application WO-A-9012117 published on 18.10.1990 has the priority date of 31.03.89.

WO-A-9012117 discloses a sugar composition consisting of 90-95% sugar and from 10-1% of a non-gelling water-soluble dietary fibre, the dietary fibre may be sugar beet fibre which is soluble in the gut. The sugar and the dietary fibre may be bound together using water and subsequent drying or by coating the sugar with the dietary fibre.

US-A-4659388 discloses a food additive comprising microfibrillated cellulose and a water-soluble saccharide in order to treat intestinal disorders. The water soluble saccharide was present in order to prevent the agglomeration of the fibrils of the microfibrillated cellulose.

According to the present invention, there is provided a dietary material comprising the product of binding a sugar with a support material, the support material containing a high proportion of hemicellulose, both the sugar and the support material being fermentable in the indigenous flora of the gut of an animal or human and the support material being such as to cause the bound sugar to resist hydrolysis in favour of fermentation.

Further according to the present invention there is provided a dietary material comprising the product of binding a sugar with a support material, the support material containing a high proportion of hemicellulose, the sugar comprising at least one of lactose, maltose, raffinose, and stachyose, both the sugar and the support material being fermentable in the indigenous flora of the gut of an animal or human and the support material being such as to cause the bound sugar to resist hydrolysis in favour of fermentation.

Preferably, the support material is resistant to solution in the gut.

Preferably, the support material is fermentable in the gut but at a slower rate than the sugar.

Preferably, the support material comprises the cell wall material of root crops such as sugar-beet.

Preferably the support material is augmented with other specific hemicellulosic materials such as guar gum.

Preferably also, the dietary material includes an organic acid such as lactic acid.

Preferably, the organic acid is present as not more than 20% of the dietary material.

Further according to the present invention, there is provided a method of producing a dietary material, comprising binding together a sugar and a support material, the support material containing a high proportion of hemicellulose, both the sugar and the support material being fermentable in the indigenous flora of the gut of an animal or human and the support material being capable of binding to the sugar to resist hydrolysis in favour of fermentation in the gut.

Further according to the invention, there is provided a method of producing a dietary material comprising binding together a sugar and a support material, the sugar comprising at least one of lactose, maltose, raffinose and stachyose, both the sugar and the support material being fermentable in the indigenous flora of the gut of an animal or human and the support material being capable of binding to the sugar to cause the sugar to resist hydrolysis in favour of fermentation in the gut.

Preferably, the support material binding to the sugar is modulated by the addition of a specific hemicellulose such as guar gum and the pH is optimized for fermentation by the addition of an organic acid.

Preferably, the dietary material is allowed to dry to form a solid type food.

Preferably, the support material comprises the cell wall material of root crops such as sugar-beet.

Typically the binding may be performed by contacting the sugar and the support material (or a substance containing the support material) in solution, allowing the support material or substance to rehydrate, adding a binding material such for example as guar gum, and acidifying the solution.

Embodiments of the invention will now be described by way of illustration in the following examples.

### EXAMPLE 1

Lactose is dissolved in hot water. To this solution is added guar gum and lactic acid. Sugar-beet pulp, which consists mainly of hemicellulose, is stirred into the solution and the mixture is allowed to stand until the pulp rehydrates. The water is then boiled off until a syrup is formed. The mixture is allowed to cool and stirred vigorously so that on setting the material has a granular character. The granules are then further dried in a stream of warm air until the water content is less than 15%. The final proportions in the granular product are between 50% and 80% by weight lactose, up to 20% organic acid and about 20% by weight support material.

Administration of the granules to early weaned pigs has the effect of changing the nature and proportions of gut flora in a beneficial manner by release of complex array of metabolites, including lactic acid, through fermentation of the lactose. The hemicellulose support allows the lactose to resist hydrolysis and provides the matrix support for bacterial multiplication. In addition the increased number and range of lactobacilli bind to receptor sites on the gut surface which could otherwise be available to non-beneficial bacteria.

The hemicellulose is especially advantageous as the support material as it ferments and promotes an increase in lactobacilli in a more distal part of the gut, thereby giving a sustained stabilising influence. This is of considerable benefit over support materials which are indigestible and which accordingly abduct nutrients from the small intestine.

In general the support should preferably be rapidly fermentable to the extent of undergoing 80% fermentation after 6 hours in the gut.

### EXAMPLE 2

An experimental diet comprising an embodiment of the invention includes:

| Ingredients (g/kg) | |
|---|---|
| Wheat | 350 |
| Wheat flakes | 150 |
| Oat flakes | 150 |
| Dietary material of invention | 100 |
| Full-fat soya (extruded) | 50 |
| Potato protein | 50 |
| Herring meal | 125 |
| Vegetable oil | 12 |
| Limestone | 5.5 |
| Dicalphosphate | 2.5 |
| Salt | 2.5 |
| Minerals and Vitamins | 2.5 |

| Calculated Analysis | |
|---|---|
| Digestible energy (MJ/kg) | 15.0 |
| Lysine (g/kg) | 14.3 |
| Calcium (g/kg) | 7.0 |
| Phosporous (g/kg) | 6.0 |

The inventive material in this example, known as Acidified Cellulac MK II, contains 57.5% lactose, 20% sugar beet pulp and 2.5% guar gum.

While the sugar is preferably lactose, other sugars such as maltose and raffinose, may of course, be used. Oligosaccharides may also be used, such as stachyose.

Similarly, support materials other than sugar-beet pulp may be used and these include whole grain having a ruptured shell, eg whole wheat, guar gum, methyl cellulose and other cellulose derivatives having a disrupted structure. Hemicellulose cannot be digested by direct hydrolysis in the foregut because of the lack of the appropriate array of endogenous enzymes. It is, however, readily fermented by bacteria in the gut to yield organic acids and other metabolides. Hemicellulose is, by comparison with lactose, relatively insoluble and it also has a definite physical macrostructure. This makes it attractive as a complementary substrate to lactose. Cheap sources of hemicellulose are available in the cell wall material of root crops such for example as sugar-beet.

The use of the support material in this embodiment of the invention renders the bound lactose resistant to endogenous hydrolysis. The effect of this is to allow lactobacilli in the gut to attach to the support material and ferment the bound lactose, releasing lactic acid which lowers the pH of the gut fluids. This has the beneficial effect of rendering the gut environment unsuitable for rapid reproduction of such micro-organisms as E.coli and Klebsiella, and the bacterial flora of the gut are thus altered in composition and proportion. In this way the cause and effect of diseases is believed to be controllable by dietary means.

Through experimentation, it is believed that the critical events which determine the nature of fermentation in the gut occur quite early in the digestion process. It is further believed that the pH of the digesta in the stomach and duodenum sets the pattern for the balance of micro-organisms in the rest of the tract. To accommodate this belief, the dietary material is modified to be acidic. This may be achieved by the addition of lactic acid, although again other acids may be used, including other organic acids such as, for example, citric or fumaric acid. These acids encourage the growth of acidophilic flora in the upper digestive tract.

It has been found in the invention that acidifying the product gives an early advantage to acid tolerant organisms. This is especially true if the promoted organisms are not strongly adherent to the gut wall, but flourish in the digesta contained in the lumen. Secondly, the addition of lactic acid encourages the proliferation of lactobacilli on the surface of the matrix of the dietary material. This local effect is found to be more beneficial in terms of seeding the gut with lactobacilli than by simple acidification of the diet which is likely to be less successful owing to dilution and buffering by other feed ingredients and the buffering capacity of the digestive tract.

Liquid lactic acid may be added to the constituents of the dietary material prior to the drying phase of the manufacturing process described in Example 1. It is found that the acidifying of the dietary material provides not only a substrate favourable to lactobacilli but a mileau which favours their differential selection and multiplication as opposed to pathogenic organisms.

A research programme of experiments was set up to identify the response to increasing use of the dietary material or its separate ingredients in the diets of newly weaned piglets. The results of the experimentation were encouraging, and pigs on the dietary material had higher daily gains in terms of growth especially in the immediate post-weaning period, than those given the same ingredients but not in the combined form and those fed on a normal control diet.

Other findings from the experiments included that finer grinding of the granules was beneficial and that readily available lactose was shown directly to be a beneficial factor in the immediate post-weaning period. This is believed to be the result of the lactose helping to stabilise the pH of the foregut by providing a substrate for the favourable lactic acid producing micro-organisms. Furthermore, of some interest is the fact that the piglets treated with the dietary material had a coliform count which was between 100 and 1000 times lower than for pigs on the diet containing the separate ingredients. Thus, should there be the presence of coliform pathogens in the environment then the bacterial pattern found with the dietary material should confer a considerable benefit.

One of the experiments verifying the value of the dietary material will now be described in more detail:

### EXPERIMENT: The Effects of the Dietary Material on the Gut Health of Weaned Piglets.

### OBJECTIVE

The aim of the experiment was to identify the response to use of the dietary material or its separate ingredients in the diets of newly weaned piglets.

### Animals

Twenty seven chinese Maishan male and female piglets weaned at twenty one days of age have been used in the experiment summarised below. An additional four animals were used to provide pre-weaning data.

### Method:

The piglets were divided into three groups and each group was treated as described below.
Treatment A: Control - Basal Weaner Diet
Treatment B: Separate - As Treatment C but with lactic acid and dietary material constituents added separately
Treatment C: Dietary Material - As control but with 10% acidified dietary material with adjustments of basal dietary raw materials to give identical DE and Lysine contents
All diets provided the same level of DE and Lysine by varying the inclusion rates of maize starch and sucrose. Formulations of the diets are given in Table 1A.

The Experiment was essentially of a sequential slaughter type to follow chronological changes in gut physiology after weaning. This included measurements of four piglets just before weaning at twenty days of age, then on piglets during the immediate post-weaning period (Day 4) and finally (Day 8 and 16) after weaning when the gut begins to normalise and the stable post weaning state is established. The following slaughter sequence was used.

| **Treatments** | | | | |
|---|---|---|---|---|
| | Age (days) | A | B | C |
| (pre-weaning) | 20 | - | - | - 4 (once |
| (after-weaning) | 24 (day 4) | 3 | 3 | 3 |
| | 28 (day 8) | 3 | 3 | 3 |
| | 36 (day 16) | 3 | 3 | 3 |

A male and a female were taken from two different litters for the pre-weaning assessment. For the post-weaning studies males and females were selected from within litters to ensure that each group of 9 pigs on each of the dietary treatments within the experiment were balanced for initial weight and origin of litter.

Selection of piglets for slaughter at any one time were also carried out at random.

### EXPERIMENTAL PROCEDURES

Piglets were weighed and weaned at 21 days of age and fed the experimental diets ad libitum. All food inputs to hoppers were recorded and uneaten food was removed and weighed from the hoppers on day 4, 8 and 16 after weaning. Water was offered ad libitum.

Piglets were weighed and slaughtered using an overdose of anaesthesia (10ml intracardiac injection of sodium pentobarbitone) to minimise traumatic shock and the shedding of gut enterocytes. They were then processed in the following manner.
1. The entire digestive tract was removed and weighed. The small intestine was ligated at the gastric pylorus and ileocecal sphincter and then detached from the stomach and the caecum and weighed. The stomach was weighed separately.
2. The caecum was detached from the colon and both were weighed separately.
3. Contents of the stomach, caecum and of the colon were emptied, weighed and retained for the determination of pH and for subsequent chemical analysis.
4. The small intestine was detached from the mesentery and ligated at 2 points dividing it into 3 equal lengths.
   The sections were segmented at each ligate and the contents were emptied, weighed and retained for the determination of pH and for subsequent chemical analysis. The empty segments of the small intestine were weighed together (ie minus the mesentery).
5. Sections of about 2.5cm from the middle of each segment of the small intestine were removed and split along the mesentery and pinned flat (lumen facing out) to balsa wood and fixed in formaline saline (10% neutral buffered formalin and 0.85% NaCl) and then reduced to 70 percent ethanol for subsequent histological examination.
6. Contents from the large intestine of animals slaughtered at 36 days of age were retained for bacteriological examination. Samples were taken from both the caecum and the colon.

### SITE OF STUDY

Tillycorthie Farm (The Scottish Agricultural College-Aberdeen), Udny, Aberdeenshire.

**Table 1A**

| Formulation of experimental diets. | | | |
|---|---|---|---|
| Ingredients (g/kg) | Treatment | | |
| | A | B | C |
| Wheat | 380 | 350 | 350 |
| Wheat flakes | 150 | 150 | 150 |
| Oat flakes | 150 | 150 | 150 |
| Sugar beet pulp | 0 | 20 | 0 |
| Lactose | 0 | 57.5 | 0 |
| Lactic acid | 0 | 20 | 0 |
| Guar gum | 0 | 2.5 | 0 |
| Maize starch | 30 | 0 | 0 |
| Sucrose | 40 | 0 | 0 |
| Acidified cellulac Mk II^{a} | 0 | 0 | 100 |
| Limestone | 5.5 | 5.5 | 5.5 |
| Dicalphosphate | 2.5 | 2.5 | 2.5 |
| Salt | 2.5 | 2.5 | 2.5 |
| Minerals & vitamins | 2.5 | 2.5 | 2.5 |
| | 1000.0 | 1000.0 | 1000.0 |

| Calculated analysis | | | |
|---|---|---|---|
| Digestible energy (MJ/Kg) | 15.0 | 15.0 | 15.0 |
| Lysine (g/kg) | 14.3 | 14.3 | 14.3 |
| Calcium (g/kg) | 7.0 | 7.0 | 7.0 |
| phosphorous (g/kg) | 6.0 | 6.0 | 6.0 |

Acidified cellulac Mk II contained 57.5% lactose, 20% sugar beet pulp, 2.5% guar gum and 20% lactic acid.

**Table 2A**

| Daily intake and growth rate of piglets after weaning. | | | | | |
|---|---|---|---|---|---|
| | Treatment | | | s.e.d | P |
| | A | B | C | | |
| Initial weight(kg) | 3.21 | 3.19 | 3.26 | 0.292 | NS |

| Daily feed intake (g) | | | | | |
|---|---|---|---|---|---|
| Day 0 to 4 | 50.83 | 50.28 | 58.06 | - | - |
| Day 4 to 8 | 82.92 | 94.17 | 94.17 | - | - |
| Day 8 to 16 | 149.38 | 156.67 | 146.67 | - | - |

| Daily gain (g) | | | | | |
|---|---|---|---|---|---|
| Day 0 to 4 | -0.56 | -0.58 | 6.67 | 43.410 | NS |
| Day 4 to 8 | 14.58 | 34.58 | 48.33 | 31.885 | NS |
| Day 8 to 16 | 143.75 | 129.17 | 210.42 | 62.290 | NS |

**Table 3A**

| Weight and pH of digesta removed from the stomach, small and large intestine and weights of empty gut sections as percentage of carcass weight of pig before weaning at 20 days of age. | | |
|---|---|---|
| pH of digesta | Mean | s.e.m |
| Stomach | 3.56 | 0.176 |

| Small intestine | | |
|---|---|---|
| Part I | 6.16 | 0.109 |
| Part II | 6.44 | 0.091 |
| Part III | 7.27 | 0.057 |
| Caecum | 6.82 | 0.119 |
| Colon | 7.07 | 0.216 |

| Weight of digesta (g) | | |
|---|---|---|
| Stomach | 61.50 | 11.90 |

| Small intestine | | |
|---|---|---|
| Part I | 11.00 | 3.79 |
| Part II | 22.00 | 6.66 |
| Part III | 23.33 | 5.21 |
| Caecum | 9.75 | 1.11 |
| Colon | 20.75 | 2.93 |
| Total | 149.00 | 28.30 |

| Weight of gut as a % of carcass weight | | |
|---|---|---|
| Stomach | 0.94 | 0.012 |
| Small intestine^{a} | 8.02 | 0.262 |
| Caecum | 0.30 | 0.048 |
| Colon | 1.96 | 0.135 |
| Total | 11.25 | 0.439 |

| | | |
|---|---|---|
| ^{a} Includes mesentery | | |

**Table 4A**

| Weight and pH of digesta removed from the stomach, small and large intestine and weights of empty gut sections as percentage of carcass weight day 4 after weaning. | | | | | |
|---|---|---|---|---|---|
| pH of digesta | Treatment | | | s.e.d | P |
| | A | B | C | | |
| Stomach | 3.45 | 3.32 | 3.25 | 0.251 | NS |

| Small intestine | | | | | |
|---|---|---|---|---|---|
| Part I | 5.78 | 6.29 | 5.93 | 0.350 | NS |
| Part II | 6.27 | 6.93 | 6.33 | 0.180 | 0.02 |
| Part III | 6.59 | 7.33 | 7.07 | 0.142 | 0.006 |
| Caecum | 6.33 | 6.85 | 6.47 | 0.270 | NS |
| Colon | 6.52 | 6.86 | 6.82 | 0.095 | 0.02 |

| Weight of digesta (g) | | | | | |
|---|---|---|---|---|---|
| Stomach | 99.33 | 83.67 | 131.00 | 20.881 | NS |

| Small intestine | | | | | |
|---|---|---|---|---|---|
| Part I | 11.67 | 11.00 | 14.67 | 7.870 | NS |
| Part II | 48.33 | 28.00 | 62.33 | 16.971 | NS |
| Part III | 38.67 | 15.00 | 37.67 | 6.693 | 0.02 |
| Caecum | 9.00 | 9.33 | 12.00 | 5.663 | NS |
| Colon | 55.67 | 59.33 | 83.00 | 6.957 | 0.02 |
| Total | 262.67 | 206.33 | 340.67 | 43.970 | NS(0.06) |

| Weight of gut as a % of carcass weight | | | | | |
|---|---|---|---|---|---|
| Stomach | 1.22 | 1.15 | 1.20 | 0.125 | NS |
| Small inte- | 6.37 | 6.11 | 6.88 | 0.409 | NS |
| stine^{a} | | | | | |
| Caecum | 0.21 | 0.31 | 0.27 | 0.036 | NS(0.09) |
| Colon | 1.87 | 2.10 | 2.05 | 0.186 | NS |
| Total | 10.67 | 10.47 | 11.30 | 0.639 | NS |

| | | | | | |
|---|---|---|---|---|---|
| ^{a} Excludes mesentery | | | | | |

**Table 5A**

| Weight and pH of digesta removed from the stomach, small and large intestine and weights of empty gut sections as percentage of carcass weight day 8 after weaning. | | | | | |
|---|---|---|---|---|---|
| pH of digesta | Treatment | | | s.e.d | P |
| | A | B | C | | |
| Stomach | 3.40 | 3.64 | 3.31 | 0.087 | 0.02 |

| Small intestine | | | | | |
|---|---|---|---|---|---|
| Part I | 5.66 | 5.96 | 5.98 | 0.263 | NS |
| Part II | 6.27 | 6.62 | 6.37 | 0.335 | NS |
| Part III | 6.50 | 7.40 | 6.80 | 0.171 | 0.005 |
| Caecum | 6.19 | 6.42 | 6.23 | 0.159 | NS |
| Colon | 6.55 | 6.67 | 6.45 | 0.175 | NS |

| Weight of digesta (g) | | | | | |
|---|---|---|---|---|---|
| Stomach | 145.33 | 83.33 | 118.00 | 38.297 | NS |

| Small intestine | | | | | |
|---|---|---|---|---|---|
| Part I | 20.33 | 20.33 | 14.67 | 12.754 | NS |
| Part II | 48.00 | 27.67 | 33.67 | 20.575 | NS |
| Part III | 68.33 | 25.00 | 49.67 | 5.790 | NS(0.09) |
| Caecum | 18.00 | 9.00 | 10.67 | 4.698 | NS |
| Colon | 75.00 | 62.00 | 64.00 | 21.726 | NS |
| Total | 375.00 | 227.30 | 290.70 | 95.917 | NS |

| Weight of gut as a % of carcass weight | | | | | |
|---|---|---|---|---|---|
| Stomach | 1.47 | 1.34 | 1.42 | 0.147 | NS |
| Small inte- | 7.63 | 7.15 | 7.21 | 0.792 | NS |
| stine^{a} | | | | | |
| Caecum | 0.32 | 0.28 | 0.33 | 0.031 | NS |
| Colon | 2.82 | 2.17 | 1.93 | 0.374 | NS |
| Total | 13.15 | 11.81 | 11.47 | 1.200 | NS |

| | | | | | |
|---|---|---|---|---|---|
| ^{a} Excludes mesentery | | | | | |

**Table 6A**

| Weight and pH of digesta removed from the stomach, small and large intestine and weights of empty gut sections as percentage of carcass weight day 16 after weaning. | | | | | |
|---|---|---|---|---|---|
| pH of digesta | Treatment | | | s.e.d | P |
| | A | B | C | | |
| Stomach | 3.37 | 3.85 | 3.15 | 0.234 | NS(0.00) |

| Small intestine | | | | | |
|---|---|---|---|---|---|
| Part I | 5.50 | 5.68 | 5.38 | 0.212 | NS |
| Part II | 6.34 | 6.35 | 6.20 | 0.101 | NS |
| Part III | 6.53 | 6.76 | 6.68 | 0.210 | NS |
| Caecum | 6.46 | 6.19 | 5.99 | 0.216 | NS |
| Colon | 6.28 | 6.39 | 6.45 | 0.104 | NS |

| Weight of digesta (g) | | | | | |
|---|---|---|---|---|---|
| Stomach | 204.50 | 185.33 | 170.00 | 46.116 | NS |

| Small intestine | | | | | |
|---|---|---|---|---|---|
| Part I | 32.50 | 36.67 | 28.00 | 17.378 | NS |
| Part II | 44.50 | 47.00 | 63.33 | 20.607 | NS |
| Part III | 50.00 | 82.00 | 49.33 | 18.203 | NS |
| Caecum | 4.00 | 22.00 | 24.33 | 10.231 | NS |
| Colon | 88.50 | 95.67 | 115.67 | 17.436 | NS |
| Total | 424.00 | 468.67 | 450.67 | 71.274 | NS |

| Weight of gut as a % of carcass weight | | | | | |
|---|---|---|---|---|---|
| Stomach | 1.62 | 1.67 | 1.55 | 0.214 | NS |
| Small inte- | 10.20 | 8.61 | 9.72 | 1.077 | NS |
| stine^{a} | | | | | |
| Caecum | 0.38 | 0.35 | 0.40 | 0.043 | NS |
| Colon | 3.35 | 3.06 | 2.75 | 0.306 | NS |
| Total | 16.55 | 14.51 | 16.23 | 1.730 | NS |

| | | | | | |
|---|---|---|---|---|---|
| ^{a} Excludes mesentery | | | | | |

### Health

The piglets were closely observed for the presence of any watery or loose faeces at weaning and on day 4, 8 and 16 after weaning. The records are presented below.

**Table 7A**

| Number of piglets with diarrhoea at weaning and on days 4, 8, and 16 after weaning. | | | | |
|---|---|---|---|---|
| Treatment | At weaning | Days after weaning | | |
| | | 4 | 8 | 16 |
| A | 0 | 3 | 3 | 1 |
| B | 0 | 3 | 2 | 1 |
| C | 0 | 1 | 2 | 1 |

### Gut Microbiology

Contents from the caecum of 6 animals of a similar experiment (2 per treatment) and from the caecum and colon of 6 animals in this experiment (2 per treatment) slaughtered at 35 days of age were sent to Dr Collin Stuart at the Rowett Research Institute for the quantative determination of total anaerobes, coliforms and lactobacilli. The results of the similar experiment are given below.

**Table 8A**

| Total anaerobe, coliform and lactobacilli counts in caecal contents of piglets day 16 after weaning. | | | |
|---|---|---|---|
| Treatment | Total anaerobes | Coliforms (Per ml of caecal fluid) | Lactobacilli |
| A | 2.1 x 10¹⁰ | 2.3 x 10⁷ | 5.6 x 10⁹ |
| A | 6.2 x 10¹¹ | 1.2 x 10⁷ | 4.4 x 10⁹ |
| B | 1.6 x 10¹⁰ | 1.0 x 10⁶ | 5.6 x 10⁹ |
| B | 6.2 x 10¹¹ | 3.5 x 10⁶ | 3.6 x 10⁹ |
| C | 9.2 x 10⁹ | 3.0 x 10⁴ | 1.5 x 10⁹ |
| C | 1.2 x 10¹² | 1.6 x 10⁵ | 3.2 x 10⁹ |

Modifications and improvements may be made without departing from the scope of the invention.

## Claims (Claims for the following Contracting State(s): AT, BE, CH, DE, DK, ES, FR, GB, IT, LI, LU, NL, SE)

1. A dietary material comprising the product of binding a sugar with a support material, the support material containing a high proportion of hemicellulose, the sugar comprising at least one of lactose, maltose, raffinose, and stachyose, both the sugar and the support material being fermentable in the indigenous flora of the gut of an animal or human and the support material being such as to cause the bound sugar to resist hydrolysis in favour of fermentation.

2. A dietary material as claimed in Claim 1, wherein the support material is fermentable in the gut but at a slower rate than the sugar.

3. A dietary material as claimed in Claim 1 or Claim 2, wherein the support material is augmented with other specific hemicellulosic materials.

4. A dietary material as claimed in any one of the preceding Claims, wherein the support material is augmented with guar gum.

5. A dietary material as claimed in any one of the preceding Claims, including an organic acid.

6. A dietary material as claimed in Claim 5, wherein the organic acid is lactic acid.

7. A dietary material as claimed in Claim 6, wherein the lactic acid is present as not more than 20% of the dietary material.

8. A method of producing a dietary material, comprising binding together a sugar and a support material, the support material containing a high proportion of hemicellulose, the sugar comprising at least one of lactose, maltose, raffinose and stachyose, both the sugar and the support material being fermentable in the indigenous flora of the gut of an animal or human and the support material being capable of binding to the sugar to resist hydrolysis in flavour of fermentation in the gut.

## Claims (Claims for the following Contracting State(s): GR)

1. A dietary material comprising the product of binding a sugar with a support material, the support material containing a high proportion of hemicellulose, both the sugar and the support material being fermentable in the indigenous flora of the gut of an animal or human and the support material being such as to cause the bound sugar to resist hydrolysis in favour of fermentation.

2. A dietary material as claimed in Claim 1, wherein the sugar comprises at least one of lactose, maltose, raffinose and stachyose.

3. A dietary material as claimed in Claim 1 or Claim 2, wherein the support material is fermentable in the gut but at a slower rate than the sugar.

4. A dietary material as claimed in Claim 1, 2 or 3, wherein the support material is augmented with other specific hemicellulosic materials.

5. A dietary material as claimed in any one of the preceding Claims, wherein the support material is augmented with guar gum.

6. A dietary material as claimed in any one of the preceding Claims, including an organic acid.

7. A dietary material as claimed in Claim 6, wherein the organic acid is lactic acid.

8. A dietary material as claimed in Claim 7, wherein the lactic acid is present as not more than 20% of the dietary material.

9. A method of producing a dietary material, comprising binding together a sugar and a support material, the support material containing a high proportion of hemicellulose, both the sugar and the support material being fermentable in the indigenous flora of the gut of an animal or human and the support material being capable of binding to the sugar to resist hydrolysis in favour of fermentation in the gut.

10. A method as claimed in Claim 9, wherein the sugar comprises at least one of lactose, maltose, raffinose and stachyose.

## Patentansprüche (Patentansprüche für folgende(n) Vertragsstaat(en): AT, BE, CH, DE, DK, ES, FR, GB, IT, LI, LU, NL, SE)

1. Diätmaterial, das das Produkt einer Bindung eines Zuckers mit einem Trägermaterial umfaßt, wobei das Trägermaterial einen hohen Anteil an Hemicellulose enthält, der Zucker zumindest eines der folgenden Bestandteile Laktose, Maltose, Raffinose und Stachyose umfaßt, sowohl der Zucker als auch das Trägermaterial durch die Besiedelungsflora des Darms eines Tieres oder eines Menschen fermentierbar sind und das Trägermaterial derart beschaffen ist, daß es den gebundenen Zucker zugunsten der Fermentation vor der Hydrolyse bewahrt.

2. Diätmaterial nach Anspruch 1, in dem das Trägermaterial im Darm fermentierbar ist, aber in einer geringeren Geschwindigkeit, als der Zucker.

3. Diätmaterial nach Anspruch 1 oder Anspruch 2, in dem das Trägermaterial durch andere spezifische Hemicellulosematerialien vermehrt wird.

4. Diätmaterial nach einem der vorangehenden Ansprüche, in dem das Trägermaterial mit Guaran vermehrt wird.

5. Diätmaterial nach einem der vorangehenden Ansprüche, das eine organische Säure enthält.

6. Diätmaterial nach Anspruch 5, in dem die organische Säure Milchsäure ist.

7. Diätmaterial nach Anspruch 6, in dem die Milchsäure nicht mehr als 20 % des Diätmaterials ausmacht.

8. Verfahren zur Herstellung eines Diätmaterials, das die Verbindung eines Zuckers und eines Trägermaterials umfaßt, wobei das Trägermaterial einen hohen Anteil an Hemicellulose enthält, der Zucker zumindest einen aus Laktose, Maltose, Raffinose und Stachyose umfaßt, sowohl der Zucker als auch das Trägermaterial durch die Besiedelungsflora des Darms eines Tieres oder eines Menschen fermentierbar sind und das Trägermaterial zur Bindung an den Zucker fähig ist, um zugunsten der Fermentation im Darm der Hydrolyse zu widerstehen.

## Patentansprüche (Patentansprüche für folgende(n) Vertragsstaat(en): GR)

1. Diätmaterial, das das Produkt einer Bindung eines Zuckers mit einem Trägermaterial umfaßt, wobei das Trägermaterial einen hohen Anteil an Hemicellulose enthält, sowohl der Zucker als auch das Trägermaterial durch die Besiedelungsflora des Darms eines Tieres oder eines Menschen fermentierbar sind und das Trägermaterial derart beschaffen ist, daß es den gebundenen Zucker zugunsten der Fermentation vor der Hydrolyse bewahrt.

2. Diätmaterial nach Anspruch 1, in dem der Zucker mindestens einen aus Laktose, Maltose, Raffinose und Stachyose umfaßt.

3. Diätmaterial nach Anspruch 1 oder Anspruch 2, in dem das Trägermaterial im Darm fermentierbar ist, aber in einer geringeren Geschwindigkeit, als der Zucker.

4. Diätmaterial nach Anspruch 1, 2 oder 3, in dem das Trägermaterial durch andere spezifische Hemicellulosematerialien vermehrt wird.

5. Diätmaterial nach einem der vorangehenden Ansprüche, in dem das Trägermaterial mit Guaran vermehrt wird.

6. Diätmaterial nach einem der vorangehenden Ansprüche, das eine organische Säure enthält.

7. Diätmaterial nach Anspruch 6, in dem die organische Säure Milchsäure ist.

8. Diätmaterial nach Anspruch 7, in dem die Milchsäure nicht mehr als 20 % des Diätmaterials ausmacht.

9. Verfahren zur Herstellung eines Diätmaterials, das die Verbindung eines Zuckers und eines Trägermaterials umfaßt, wobei das Trägermaterial einen hohen Anteil an Hemicellulose enthält, sowohl der Zucker als auch das Trägermaterial durch die Besiedelungsflora des Darms eines Tieres oder eines Menschen fermentierbar sind und das Trägermaterial zur Bindung an den Zucker fähig ist, um zugunsten der Fermentation im Darm der Hydrolyse zu widerstehen.

10. Verfahren nach Anspruch 9, worin der Zucker zumindest einen aus Laktose, Maltose, Raffinose und Stachyose umfaßt.

## Revendications (Revendications pour l'(les) Etat(s) contractant(s) suivant(s): AT, BE, CH, DE, DK, ES, GB, IT, LI, LU, NL, SE)

1. Produit diététique comprenant le produit de liaison d'un sucre avec une matière support, la matière support contenant une proportion élevée d'hémicellulose, le sucre comprenant au moins un lactose, un maltose, un raffinose et un stachyose,le sucre et la matière support étant fermentables dans la flore intestinale indigène de l'animal ou de l'homme, et la matière support étant telle qu'elle provoque une résistance du sucre lié à l'hydrolyse, en faveur de la fermentation.

2. Produit diététique selon la revendication 1 dans laquelle la matière support est fermentable dans l'intestin, mais moins rapidement que le sucre.

3. Produit diététique selon la revendication 1 ou 2 dans laquelle la matière support est augmentée par d'autres matières hémicellulosiques spécifiques.

4. Produit diététique selon l'une quelconque des revendications précédentes dans laquelle la matière support est augmentée par de la gomme guar.

5. Produit diététique selon l'une quelconque des revendications précédentes, y compris un acide organique.

6. Produit diététique selon la revendication 5, dans laquelle l'acide organique est l'acide lactique.

7. Produit diététique selon la revendication 6, dans laquelle l'acide lactique est présent en quantité ne dépassant pas 20 % du produit diététique.

8. Procédé de production d'un produit diététique comprenant la liaison d'un sucre et d'une matière support, la matière support contenant une proportion élevée d'hémicellulose, le sucre comprenant au moins un lactose, un maltose, un raffinose et un stachyose, le sucre et la matière support étant fermentables dans la flore intestinale indigène de l'animal ou de l'homme et la matière support étant capable de se fixer au sucre pour résister à l'hydrolyse, en faveur de la fermentation dans l'intestin.

## Revendications (Revendications pour l'(les) Etat(s) contractant(s) suivant(s): GR)

1. Produit diététique comprenant le produit de liaison d'un sucre avec une matière support, la matière support contenant une proportion élevée d'hémicellulose, le sucre et la matière support étant fermentables dans la flore intestinale indigène de l'animal ou de l'homme, et la matière support étant telle qu'elle provoque une résistance du sucre lié à l'hydrolyse, en faveur de la fermentation.

2. Produit diététique selon la revendication 1 dans laquelle le sucre comprend au moins un lactose, un maltose, un raffinose et un stachyose.

3. Produit diététique selon la revendication 1 ou 2 dans laquelle la matière support est fermentable dans l'intestin, mais moins rapidement que le sucre.

4. Produit diététique selon la revendication 1, 2 ou 3 dans laquelle la matière support est augmentée par d'autres matières hémicellulosiques spécifiques.

5. Produit diététique selon l'une quelconque des revendications pré-citées dans laquelle la matière support est augmentée par de la gomme guar.

6. Produit diététique selon l'une quelconque des revendications pré-citées, y compris un acide organique.

7. Produit diététique selon la revendication 6, dans laquelle l'acide organique est l'acide lactique.

8. Produit diététique selon la revendication 7, dans laquelle l'acide lactique est présent en quantité ne dépassant pas 20 % du produit diététique.

9. Procédé de production d'un produit diététique comprenant la liaison d'un sucre et d'une matière support, la matière support contenant une proportion élevée d'hémicellulose, le sucre et la matière support étant fermentables dans la flore intestinale indigène de l'animal ou de l'homme et la matière support étant capable de se fixer au sucre pour résister à l'hydrolyse, en faveur de la fermentation dans l'intestin.

10. Procédé selon la revendication 9, dans laquelle le sucre comprend au moins un lactose, un maltose, un raffinose et un stachyose.
